# EUROPEAN PATENT APPLICATION

(11) **EP 1 785 822 A1**
(43) Date of publication of application: **16.05.2007**
(21) Application number: 05024611.5
(22) Date of filing: 11.11.2005
(51) Int. Cl.: G06F 3/045

(54) **Wiring of touch panel**

(71) Applicant: TrendON Touch Technology Corp., Taipei (TW)
(72) Inventor: Chien, Shun-Ta, Dayuan Township, Taoyuan County (TW); Chen, Shih-Ching, Jhongli City, Taoyuan County (TW)
(74) Representative: Haft, von Puttkamer, Berngruber

(57) **Abstract**

The present invention is to provide a wiring of a touch panel comprising a glass substrate including a transparent and conductive layer on a top surface; a plurality of wires disposed along a border of the glass substrate; a plurality of conductive ends formed at the top side of the glass substrate, each of the wires being electrically connected to one of the conductive ends; and a flexible circuit board provided at the wires, the flexible circuit board including a plurality of connections each electrically connected to one of the conductive ends. By utilizing this wiring, prior used conductors are replaced by the flexible circuit board in order to decrease wiring area and make wiring of the touch panel become narrower.

## Description

### FIELD OF THE INVENTION

The present invention relates to touch panels, more particularly a touch panel utilizing a flexible circuit board to replace conductors on a glass substrate thereof, or move the conductors to a bottom surface of the glass substrate in order to decrease the wiring area and make the wiring area of the touch panel narrower than the touch panels that are manufactured using the current state of the art.

### BACKGROUND OF THE INVENTION

Recently, conventional input devices (e.g. keyboards and mouse) are being replaced with touch panels as the choice of human-machine interface devices. These human-machine interface devices are widely used in various electronic products (e.g., GPSs (Global Positioning Systems), PDAs (personal digital assistants), cellular phones, and hand-held PCs). Touch panels provide direct and better user interface while eliminating the need for the conventional input devices. The space that is saved by eliminating the conventional input devices can be utilized for larger panels which would provide a better graphical user interface.

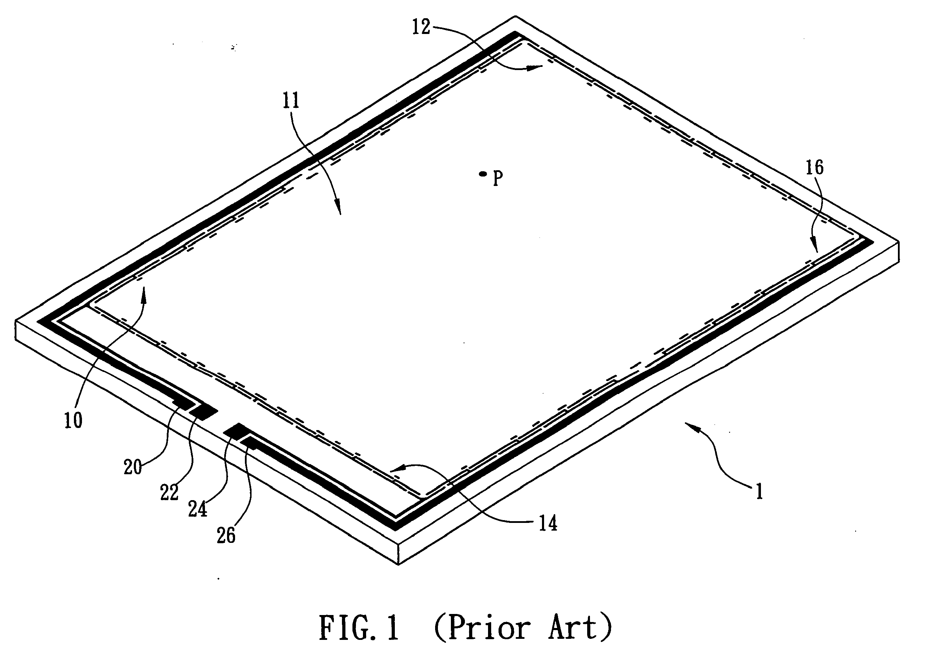

Typically, a conventional resistor touch panel can be manufactured and configured as four-wire, five-wire, or six-wire. FIG. 1 shows a touch panel having a five-wire wiring. The touch panel has a transparent and conductive glass substrate (e.g., ITO glass) 1 having two wires along each of the X-axis and the Y-axis, and a wire on a transparent and conductive film (e.g., ITO film not shown) for sampling voltage along the X-axis and the Y-axis. There are five wires located between the edges of the touch panel and the transparent operating area 11. A control circuit applies five volts to both ends of the wire 10 of the transparent and conductive glass substrate. Wire 16 is grounded (i.e., voltage between two ends is zero) when a user uses his/her finger or a pen to touch the touch panel (e.g., at point P as shown). As a result, voltage at the point P is dropped due to resistance changes. Voltage Vpy is sampled in Y-axis by the wire on the transparent and conductive film. The control circuit applies five volts to both ends of the wire 14 of the transparent and conductive film. Wire 12 is grounded (i.e. voltage between the two ends is zero). Voltage Vpx is sampled in X-axis by the wire on the transparent and conductive film. Location of the point P is determined by comparing the voltage of Vpx with the voltage of Vpy.

Moreover, the wires 10, 12, 14, and 16 have one ends electrically connected to conductors 20, 22, 24, and 26 respectively and the other ends extended to centers of sides through the same side of the transparent and conductive glass substrate 1 and the transparent and conductive film. A flexible circuit board (not shown) has one end electrically connected to the other ends of the conductors 20, 22, 24, and 26 and the other end extended beyond the transparent and conductive glass substrate 1. The transparent and conductive film has an electrical connection to a control circuit of the touch panel. The wiring area of the conductors 20, 22, 24, and 26 and the wires 10, 12, 14, and 16 are disposed at the border between the edges of the touch panel and the transparent operating area 11.

New developments in liquid crystal display technology enable manufacturers to produce displays with narrower borders than the displays produced before. Thus, when a touch panel is used with liquid crystal display, there is a need to lower the border width of the touch panel. This new requirement does not leave much of a room to layout wires on the edges of the touch screen creating new design challenges. Several inventions attempted to solve this issue. U.S. Patent 6,549,193 teaches a technique to design a resistive touch panel with an improved linear response and reduced border width. This invention concentrates on pattern design and still uses the traces that are deposited on the substrate to make connection to the cable. Therefore, the border width on the side of the panel would still be wider compared to the invention disclosed in this application. In U.S. Patent 6,559,835, a new design for resistive panel electrode pattern and conductive bus design are disclosed. A resistive linearization pattern is formed in an inward parabolic shape and conductive busses are superimposed on them. The invention claims a better linearity and narrower width than prior art. An insulator material has to be placed between the linearization pattern and the conductive busses. This would increase the manufacturing time and the complication therefore would also increase the screen cost. U.S. Patent 6,593,916 teaches how to design the linearization pattern so that the linearity can be improved while the width of the screen is reduced. However, this invention does not address the conductive buses issue. Conductive buses are required to be used and therefore increase the width of the screen. U.S. Patent 6,673,390 is another invention that addresses a new linearization pattern design. As in the previous art, this invention does not address the conductive buses that have to be used to conduct the current to four corners of the screen. These buses increase the size of the screen. U.S. Patent 6,727,895 teaches how to place conductive wires on the substrate instead of using regular wires. This increases the quality and the reliability of the screen. However this invention does not address the screen width issue. The U.S. Patent 6.781,579 teaches a touch panel linear pattern design to improve the linearity while reducing the width of the screen. Using a new design technique for linearization pattern reduces the width. However, conductive busses that carry the current to the four corners of the touch panel are still placed on the screen and these buses increase the width of the screen. The U.S. Patent 6,163,313 teaches a method of designing resistive pattern. The invention does not address the width of the screen. Most of the techniques used in prior art can be summarized as follows:
(1) One way of reducing the wiring area is to use narrower wire width than normal width. However, this technique may increase the wire resistance. As a result, voltage drop across the wire will increase and signal strength would decrease. This might interfere with signal transmission. It is also more difficult and less economical to produce touch panels with narrow connecting wires as this technique tends to reduce the production yield..
(2) Wires can be overlaped (i.e., wires and conductors are overlaid) to decrease wiring area. This technique is disclosed in Taiwanese Utility Model Patent No. 544,824. However, this approach may cause short-circuit between wires and conductors and may increase manufacturing difficulties while, decreasing yield. As a result manufacturing time and cost may increase.
(3) It is also possible to place some of the conductors on the transparent and conductive film to decrease the wiring area. However, the transparent and conductive film is affected by the changes in the environment specifically the heat change. In addition, those wires that are formed on the transparent and conductive film are low in adhesion and endurance as compared to that of the transparent and conductive glass substrate. Further, this technique may increase the manufacturing processes while increasing the manufacturing time, and the manufacturing cost.

Thus, it is desirable among touch panel designers and manufacturers to provide a touch panel having its wires and conductors disposed in a narrow border in order to overcome the problems of the prior art.

### SUMMARY OF THE INVENTION

After considerable research and experimentation, a new way of wiring of touch panel has been devised so as to overcome the above drawbacks of the prior art and to successfully dispose a touch panel's wires and conductors in a narrow border.

It is an object of the present invention to provide a wiring of a touch panel comprising a glass substrate; a plurality of conductive ends formed at one side of the glass substrate; a flexible circuit board with wires placed on it, the flexible circuit board including a plurality of connections each electrically connected to one of the conductive ends; and a plurality of wires provided along a border of the glass substrate, each of the wires being electrically connected to one of the conductive ends. This technology, replaces the prior conductors by the flexible circuit board. As a result the wiring area is decreased and the touch panel can have narrower border than the touch panel that uses the prior art for wiring.

It is another object of the present invention to provide a wiring of a touch panel comprising a glass substrate including a transparent and conductive layer on a top surface; a plurality of wires provided along a boarder of the glass substrate; a plurality of conductors provided on a bottom surface of the glass substrate opposite the transparent and conductive layer; and a plurality of conductive materials each provided at one corner of the glass substrate between the wires and the other end of a corresponding one of the conductors. By utilizing this wiring, problems associated with the conductors and the wires of prior art are solved and the wiring area on the same surface is decreased, thereby making the wiring area of the touch panel become narrower.

The above and other objects, features and advantages of the present invention will become apparent from the following detailed description taken with the accompanying drawings.

### BRIEF DESCRIPTION OF THE DRAWINGS

FIG. 1 is a perspective view of wires and conductors mounted on a conventional transparent and conductive glass substrate;
FIG. 2 is a perspective view of wires and conductors mounted on a transparent and conductive glass substrate according to a first preferred embodiment of the invention;
FIG. 3 is a view similar to FIG. 2 where connection between conductors and a flexible circuit board is shown;
FIG. 4 is a perspective view of wires mounted on a transparent and conductive glass substrate according to a second preferred embodiment of the invention;
FIG. 5 is a perspective view showing conductors mounted on the other surface of the glass substrate shown in FIG. 4;
FIG. 6 is a partial, perspective view showing conductive material of the glass substrate in FIG. 4;
FIG. 7 is a partial, perspective view showing conductive material of the glass substrate in FIG. 5;
FIG. 8 is a partial, perspective view showing conductive aperture of wire on transparent and conductive glass substrate according to a third preferred embodiment of the invention; and
FIG. 9 is a partial, perspective view showing conductive aperture of conductor on the glass substrate shown in FIG. 8.

### DETAILED DESCRIPTION OF THE PREFERRED EMBODIMENTS

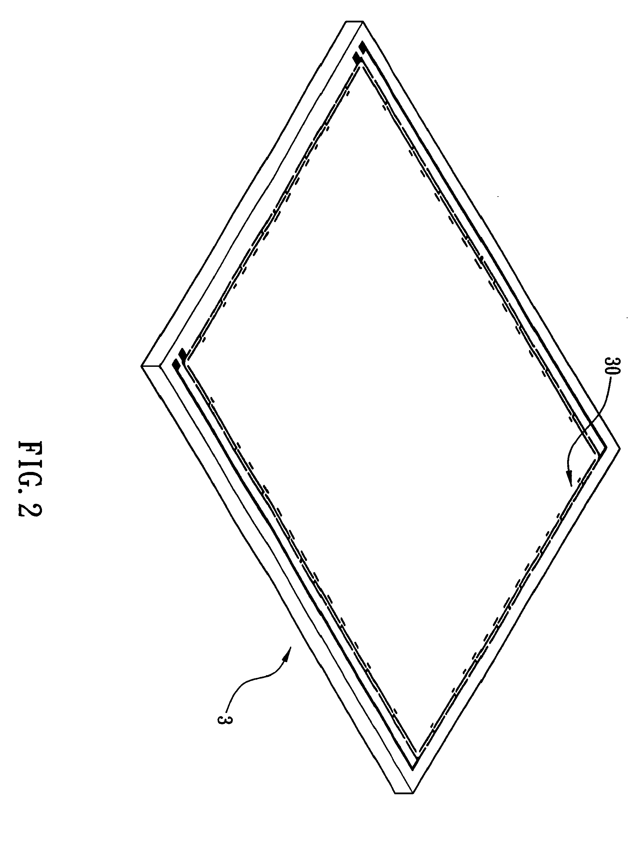

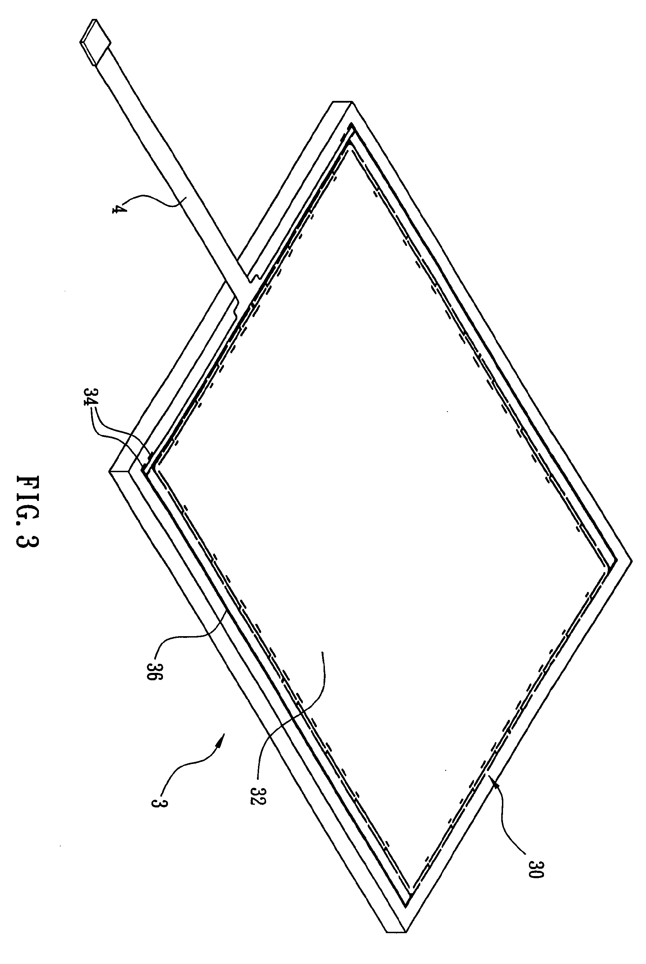

Referring to FIGS. 2 and 3, a wiring of touch panel in accordance with the first preferred embodiment of the invention is shown. A transparent and conductive layer (not shown) is placed on the top surface of a glass substrate 3. A plurality of wires 30 are provided along the border between the edge of the transparent and the conductive layer and the transparent operating area 32. A flexible circuit board 4 is placed at one side of the transparent and conductive layer and the wires 30. The flexible circuit board 4 is extended beyond the glass substrate 3 and is electrically connected to a control circuit. The conductive end 34 is formed at the transparent and conductive layer between each of the wires 30 and the flexible circuit board 4. By using this technique, the plurality of parallel conductors of prior art are replaced by the flexible circuit board 4. This decreases the wiring area requirement. As a result, it is possible to produce touch panels with narrower border than touch panels that use prior art wiring techniques.

In the invention, the wire 30 of the transparent and conductive layer that is, not adjacent to the flexible circuit board 4, has an extension conductor 36 that extends to a location which is adjacent to the flexible circuit board 4. The extension conductor 36 is electrically connected to the conductive end 34 of the wire 30. A plurality of connections (not shown) are provided in the flexible circuit board 4 and each is electrically connected to a conductive end 34.

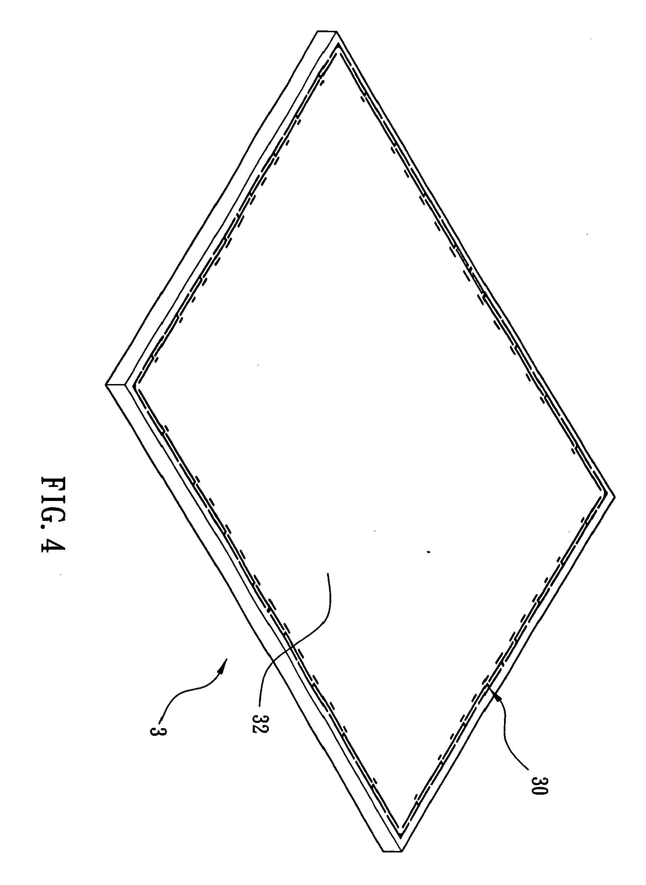

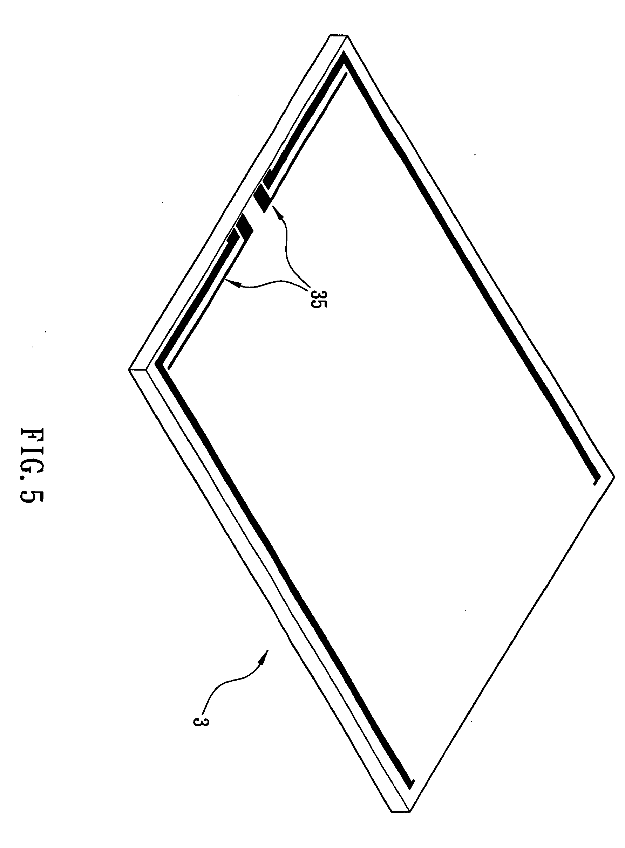

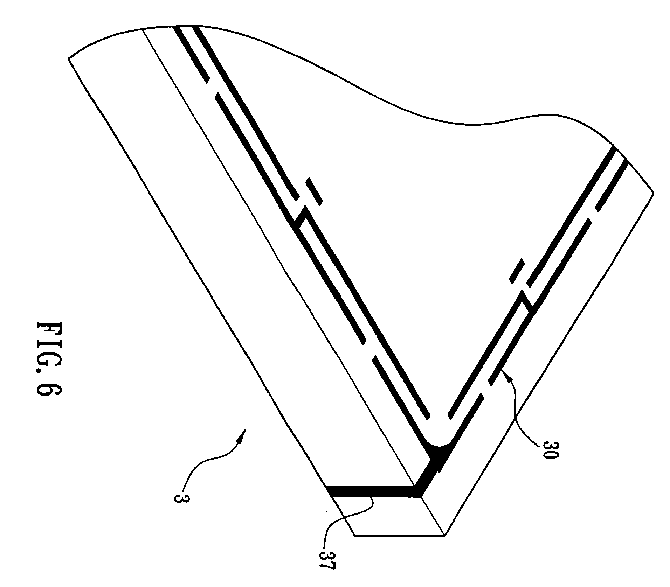

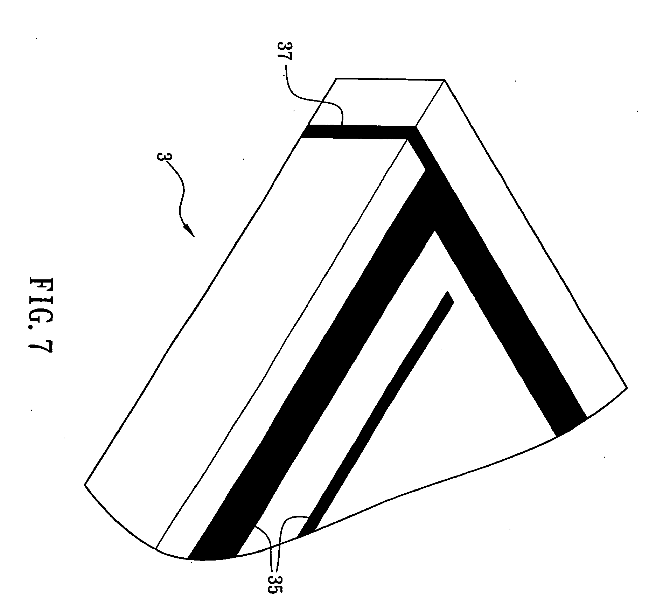

Referring to FIGS. 4 and 5, the wiring of the touch panel in accordance with a second preferred embodiment of the invention is shown. A transparent and conductive layer is placed on the top surface of the glass substrate 3. A plurality of wires 30 are provided along the border between the edge of the transparent and conductive layer and the transparent operating area 32. The plurality of conductors 35 are provided on the bottom surface of the glass substrate 3 opposite to the transparent and conductive layer. Each end of the conductors 35 are extended to a position proximate one side of the glass substrate 3 and the other ends thereof are extended to a position corresponding to one of the wires 30. The conductive material 37 (as shown in FIGS. 6 and 7) is provided at one corner of the glass substrate 3 between the wires 30 and the other end of a corresponding conductor 35. By configuring this way, the available wiring area on the transparent and the conductive layer of the glass substrate 3 will not be used by placing conductors on it. This technique provides a way of producing touch panels that have narrower borders than the panels produced utilizing prior art.

In this invention, the conductive material 37 is a flexible circuit board or a metal conductive layer formed by conductive ink printing or coating, or physical or chemical vapor deposition method that is deposited between the wires and the other end of a corresponding conductor.

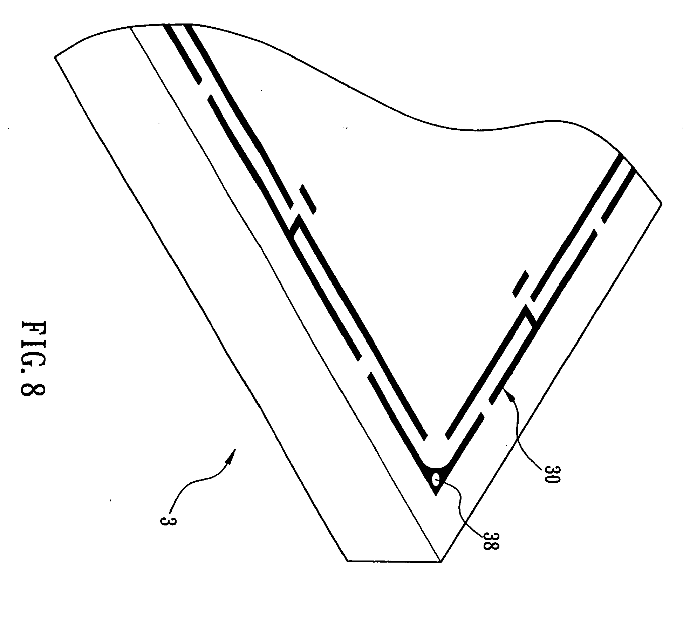

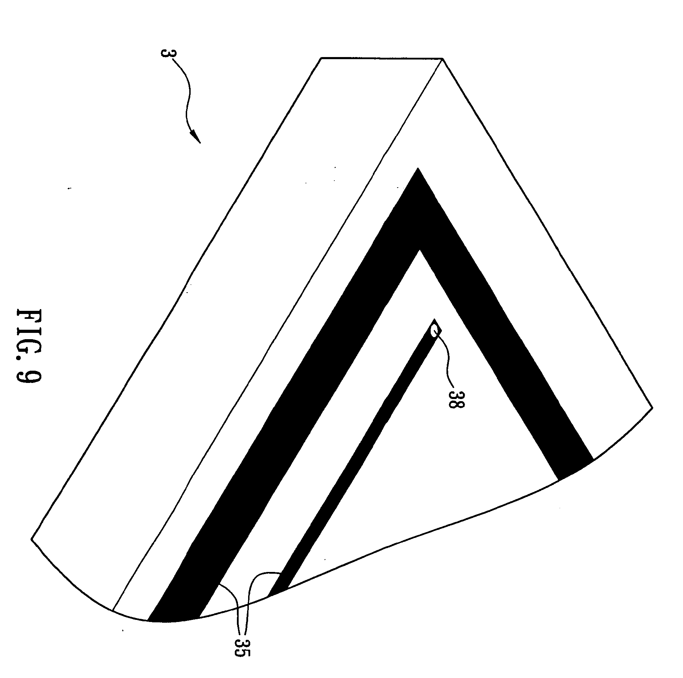

Referring to FIGS. 8 and 9, a wiring of touch panel in accordance with the third preferred embodiment of the invention is shown. The transparent and conductive layer is placed on the top surface of a glass substrate 3. The plurality of wires 30 are provided along a border between the edge of the transparent and the conductive layer and the transparent operating area 32. The plurality of conductors 35 are provided on the bottom surface of the glass substrate 3 opposite to the transparent and the conductive layer. One set of ends of the conductors 35 are extended to a position proximate to the one side of the glass substrate 3 and the other ends thereof are extended to a position corresponding to one of the wires 30. A conductive aperture 38 is provided at one corner of the glass substrate 3 between the other ends of the conductors 35 and the corresponding wire 30. A conductive material is formed in the conductive aperture 38 and is electrically connected to the conductors 35 and the wires 30. By configuring as the second embodiment with conductive material formed on side of the glass substrate, wiring area on the same surface is decreased to achieve the aim of making wiring of touch panel narrower.

In the invention, the conductive aperture 38 is formed on the glass substrate by means of laser drill (e.g., CO2, YAG, excimer, plasma, UV, etc.), hydraulic drill, cutter, or the like.

In the above embodiments, wires 30, conductors 35, and extension conductors 36 are formed by means of conductive ink printing or coating (e.g., silver paste, carbon, copper paste, etc.), or physical or chemical vapor deposition method.

While the invention herein disclosed has been described by means of specific embodiments, numerous modifications and variations could be made thereto by those skilled in the art without departing from the scope and spirit of the invention set forth in the claims.

## Claims

1. A wiring of a touch panel comprising:
a glass substrate including a transparent and conductive layer on a top surface;
a plurality of wires disposed along a border of the glass substrate;
a flexible circuit board disposed at one sides of the transparent and conductive layer and the wires, the flexible circuit board being extended beyond the glass substrate and electrically connected to a control circuit on a circuit board of the touch panel; and
a plurality of conductive ends each formed at the transparent and conductive layer between each of the wires and the flexible circuit board.

2. The wiring of claim 1, further comprising an extension conductor on the wires of the transparent and conductive layer not adjacent to the flexible circuit board, the extension conductor extended to a place adjacent to the flexible circuit board and electrically connected to one of the conductive ends.

3. The wiring of claim 1, wherein the flexible circuit board comprises a plurality of connections each electrically connected to one of the conductive ends.

4. The wiring of claim 1, further comprising a transparent operating area on the glass substrate, wherein the border of the glass substrate is extended from an edge of the transparent and conductive layer to the transparent operating area.

5. A wiring of a touch panel comprising:
a glass substrate including a transparent and conductive layer on a top surface;
a plurality of wires disposed along a border of the glass substrate;
a plurality of conductors disposed on a bottom surface of the glass substrate opposite the transparent and conductive layer wherein one ends of the conductors are extended to a position proximate one side of the glass substrate and the other ends thereof are extended to a position corresponding to one of the wires; and
a plurality of conductive materials each disposed at one corner of the glass substrate between the wires and the other end of a corresponding one of the conductors.

6. The wiring of claim 5, wherein the conductive material is a flexible circuit board.

7. The wiring of claim 5, further comprising a transparent operating area on the glass substrate, wherein the border of the glass substrate is extended from an edge of the transparent and conductive layer to the transparent operating area.

8. A wiring of a touch panel comprising:
a glass substrate including a transparent and conductive layer on a top surface;
a plurality of wires disposed along a border of the glass substrate;
a plurality of conductors disposed on a bottom surface of the glass substrate opposite the transparent and conductive layer wherein one ends of the conductors are extended to a position proximate one side of the glass substrate and the other ends thereof are extended to a position corresponding to one of the wires; and
a plurality of conductive apertures each disposed at one corner of the glass substrate between the other ends of the conductors and a corresponding one of the wires and including a conductive material therein being electrically connected to the conductors and the wires.

9. The wiring of claim 8, further comprising a transparent operating area on the glass substrate, wherein the border of the glass substrate is extended from an edge of the transparent and conductive layer to the transparent operating area.
